(19) **Europäisches Patentamt**
**European Patent Office**
**Office européen des brevets**

(11) **EP 2 800 315 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(51) Int Cl.:
*H04L 12/42* (2006.01)    *H04J 3/06* (2006.01)
*H04L 7/00* (2006.01)

(21) Anmeldenummer: **13165771.0**

(22) Anmeldetag: **29.04.2013**

(54) **VERFAHREN ZUR ZEITSYNCHRONISATION IN EINEM KOMMUNIKATIONSNETZ**

METHOD FOR SYNCHRONISING TIME IN A COMMUNICATIONS NETWORK

PROCÉDÉ DE SYNCHRONISATION TEMPORELLE DANS UN RÉSEAU DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.11.2014 Patentblatt 2014/45**

(73) Patentinhaber: **Siemens Aktiengesellschaft 80333 München (DE)**

(72) Erfinder:
• **Buhl, Michael Bernhard 85567 Grafing (DE)**
• **Obradovic, Dragan 85521 Ottobrunn (DE)**
• **Scheiterer, Ruxandra 82538 Geretsried (DE)**
• **Steindl, Günter 92284 Poppenricht (DE)**

(56) Entgegenhaltungen:
**US-A1- 2007 223 537    US-B1- 7 280 550**

**EP 2 800 315 B1**

**Beschreibung**

Die Erfindung betrifft ein Verfahren zur Zeitsynchronisation in einem Kommunikationsnetz sowie ein entsprechendes Kommunikationsnetz.

In vielen technischen Anwendungen von Kommunikationsnetzen ist es erforderlich, die an der Kommunikation teilnehmenden Netzknoten zeitlich zu synchronisieren, so dass alle Netzknoten eine exakt gleichlaufende Zeitinformation bereitstellen. Insbesondere in industriellen Automatisierungsanlagen ist es von besonderer Wichtigkeit, dass die automatischen Arbeitsvorgänge verschiedener Netzknoten genau zeitlich aufeinander abgestimmt werden.

Aus dem Stand der Technik sind verschiedene Standards zur Zeitsynchronisation in Kommunikationsnetzen bekannt, z.B. IEEE 1588, IEEE 802.1AS und IEC 61158. Dabei wird die Zeitinformation eines sog. Masterknotens, der die Zeit mit einer Masteruhr erfasst, an alle übrigen Teilnehmer des Kommunikationsnetzes übermittelt, welche sog. Slaveknoten darstellen. Die Zeitinformation ist in Synchronisationsnachrichten enthalten, welche die Slaveknoten weiterleiten. Beim Weiterleiten addieren die Slaveknoten alle ihnen bekannten Laufzeitverzögerungen zum Inhalt der Synchronisationsnachricht hinzu. Auf diese Weise kann ein Slaveknoten seine Slavezeit, die er mit einer internen Uhr erfasst, auf die Masterzeit basierend auf dem Inhalt der Synchronisationsnachrichten synchronisieren.

In den bekannten Standards addiert jeder Knoten zu entsprechenden Feldern der Synchronisationsnachricht zum einen eine interne Verarbeitungszeit (sog. Bridge-Delay) und zum anderen eine Übertragungszeit (sog. Line-Delay) hinzu. Die interne Verarbeitungszeit spezifiziert die Zeitdauer, die ein Knoten zum Verarbeiten der Nachrichten zwischen Empfang und Wiederaussenden benötigt. Demgegenüber legt die Übertragungszeit die Zeitspanne zwischen dem Aussenden der Nachricht beim vorhergehenden Netzknoten und dem Empfang beim verarbeitenden Netzknoten fest. Herkömmlicherweise wird diese Übertragungszeit durch separaten Austausch von Nachrichten zwischen benachbarten Netzknoten geschätzt, was mit zusätzlichem Aufwand verbunden ist und zu Schätzfehlern führt.

Das Dokument US7280550 beschreibt ein Verfahren zur Zeitsynchronisation in einem Kommunikationsnetz und ausgehend von dem Masterknoten die Synchronisationsnachrichten derart in der geschlossenen Topologie weitergeleitet werden, dass zumindest ein Teil der Slaveknoten jeweils eine erste Synchronisationsnachricht aus der ersten Übertragungsrichtung und eine zweite Synchronisationsnachricht aus der zweiten Übertragungsrichtung empfängt, ein jeweiliger Slaveknoten des zumindest einen Teils der Slaveknoten eine erste Zeit bestimmt, welche basierend auf der Synchronisationsinformation der ersten Synchronisationsnachricht synchronisiert ist, sowie eine zweite Zeit, welche basierend auf der Synchronisationsinformation der zweiten Synchronisationsnachricht synchronisiert ist, eine gemittelte Zeit durch arithmetische Mittelung der ersten und zweiten Zeit bestimmt wird, wobei die Synchronisationsinformationen der ersten und zweiten Synchronisationsnachricht derart ausgestaltet sind, dass die gemittelte Zeit der Masterzeit entspricht.

Aufgabe der Erfindung ist es, ein Verfahren zur Zeitsynchronisation in einem Kommunikationsnetz zu schaffen, welches eine einfache und genaue Synchronisation der Zeit in den Netzknoten des Kommunikationsnetzes ermöglicht. Diese Aufgabe wird durch die unabhängigen Patentansprüche gelöst. Weiterbildungen der Erfindung sind in den abhängigen Ansprüchen definiert.

Das erfindungsgemäße Verfahren dient zur Zeitsynchronisation in einem Kommunikationsnetz, das eine Vielzahl von Netzknoten mit einem Masterknoten und mehreren Slaveknoten umfasst, wobei der Masterknoten eine Masterzeit mit einer Masteruhr erfasst und jeder Slaveknoten eine Slavezeit mit einer internen Uhr umfasst. Dabei werden Synchronisationsnachrichten im Kommunikationsnetz übertragen, wobei die in einem Slaveknoten empfangene Synchronisationsnachricht eine Synchronisationsinformation enthält, welche zur Synchronisierung der Slavezeit des Slaveknotens auf die Masterzeit verwendet wird.

In dem erfindungsgemäßen Verfahren wird eine geschlossene Topologie aus Kommunikationspfaden zwischen benachbarten Netzknoten vorgegeben, wobei die geschlossene Topologie eine erste Übertragungsrichtung und eine entgegengesetzte zweite Übertragungsrichtung zwischen benachbarten Netzknoten des Kommunikationsnetzes festlegt. Ausgehend von dem Masterknoten werden die Synchronisationsnachrichten derart in der geschlossenen Topologie weitergeleitet, dass zumindest ein Teil der Slaveknoten des Kommunikationsnetzes jeweils eine erste Synchronisationsnachricht aus der ersten Übertragungsrichtung und eine zweite Synchronisationsnachricht aus der zweiten Übertragungsrichtung empfängt.

Ein jeweiliger Slaveknoten des zumindest einen Teils der Slaveknoten bestimmt eine erste Zeit, welche basierend auf der Synchronisationsinformation der ersten Synchronisationsnachricht synchronisiert ist, sowie eine zweite Zeit, welche basierend auf der Synchronisationsinformation der zweiten Synchronisationsnachricht synchronisiert ist. Durch arithmetische Mittelung der ersten und zweiten Zeit wird dann eine gemittelte Zeit bestimmt. Dabei sind die Synchronisationsinformationen der ersten und zweiten Synchronisationsnachricht derart ausgestaltet, dass die gemittelte Zeit der Masterzeit entspricht.

Der Erfindung liegt die Erkenntnis zu Grunde, dass über Synchronisationsnachrichten, welche in einer geschlossenen Topologie in unterschiedlichen Richtungen von einem Slaveknoten empfangen werden, Synchronisationsinformationen derart festgelegt werden können, dass sich aus der Mittelung der Zeiten, die sich aus den Synchronisationsnachrichten ergeben, die Masterzeit abgeleitet werden kann, ohne dass zusätzlich Informationen zur Übertragungszeit zwischen den Knoten übermittelt werden müssen.

In einer Variante des erfindungsgemäßen Verfahrens ist die geschlossene Topologie eine Ringtopologie, wobei der Masterknoten die erste Synchronisationsnachricht in die erste Übertragungsrichtung der Ringtopologie und die zweite Synchronisationsnachricht in die zweite Übertragungsrichtung der Ringtopologie versendet. Ebenso kann die geschlossene Topologie eine Linientopologie sein, welche von dem Masterknoten in die erste Übertragungsrichtung zu einem reflektierenden Slaveknoten und von dort wieder zurück zu dem Masterknoten führt. Dabei sendet der Masterknoten die erste Synchronisationsnachricht in die erste Übertragungsrichtung aus. Diese erste Synchronisationsnachricht wird beim Weiterleiten durch den reflektierenden Slaveknoten zur zweiten Synchronisationsnachricht.

In einer besonders bevorzugten Ausführungsform der Erfindung addiert ein jeweiliger Slaveknoten innerhalb eines Zyklus der Übermittlung einer ersten und zweiten Synchronisationsnachricht durch die geschlossene Topologie beim Weiterleiten der ersten und zweiten Synchronisationsnachricht zu der Synchronisationsinformation eine interne Verarbeitungszeit (Bridge-Delay) zwischen Empfang und Aussenden der ersten bzw. zweiten Synchronisationsnachricht sowie eine vorbestimmte, innerhalb des Zyklus feste Übertragungszeit hinzu. Ein Zyklus der Übermittlung einer ersten und zweiten Synchronisationsnachricht ist dabei bei einer Ringtopologie durch das aufeinanderfolgende Aussenden einer ersten und zweiten Synchronisationsnachricht gegeben. Im Falle einer Linientopologie beschreibt ein Zyklus die Übertragung einer Synchronisationsnachricht vom Masterknoten zum reflektierenden Slaveknoten und von dort wieder zurück zum Masterknoten, wobei die Synchronisationsnachricht bis zum reflektierten Slaveknoten die erste Synchronisationsnachricht und anschließend die zweite Synchronisationsnachricht darstellt. Die oben genannte vorbestimmte Übertragungszeit wird im Masterknoten auf die mittlere Übertragungszeit der ersten bzw. zweiten Synchronisationsnachricht entlang eines Kommunikationspfads eingestellt oder geregelt. Demzufolge muss nicht die tatsächliche Line-Delay zwischen den einzelnen Netzknoten bekannt sein.

In einer bevorzugten Variante der obigen Ausführungsform erfolgt die Regelung auf die mittlere Übertragungszeit im Masterknoten derart, dass der Masterknoten aus der in einem Zyklus empfangenen ersten oder zweiten Synchronisationsnachricht einen Fehler zwischen der tatsächlichen akkumulierten Übertragungszeit entlang aller Kommunikationspfade der geschlossenen Topologie und der akkumulierten Übertragungszeit gemäß der Synchronisationsinformation aus der ersten oder zweiten Synchronisationsnachricht bestimmt. Basierend auf diesem Fehler ermittelt der Masterknoten dann eine neue mittlere Übertragungszeit für den nächsten Zyklus.

In einer besonders bevorzugten Ausführungsform wird die Regelung auf die mittlere Übertragungszeit basierend auf folgender Gleichung realisiert:

$$LD(k+1) = LD(k) + k_i \cdot e(k) \quad (1)$$

wobei $LD(k)$ die mittlere Übertragungszeit für den aktuellen Zyklus ist;

wobei $LD(k+1)$ die neue mittlere Übertragungszeit für den nächsten Zyklus ist;

wobei $e(k)$ der Fehler zwischen der tatsächlichen akkumulierten Übertragungszeit und der akkumulierte Übertragungszeit entsprechend der Synchronisationsinformation ist;

wobei $k_i$ ein Regelparameter ist.

Zum Erreichen einer stabilen Regelung ist der Regelparameter insbesondere derart eingestellt, dass gilt:

$$|1 - k_i \cdot (N+1)| < 1,$$

wobei $N$ der Anzahl der Slaveknoten in der geschlossenen Topologie entspricht.

In einer weiteren Variante der Erfindung wird die vorbestimmte Übertragungszeit in einem Feld der ersten und zweiten Synchronisationsnachricht übermittelt, wodurch die einzelnen Slaveknoten Kenntnis über die vom Masterknoten festgelegte Übertragungszeit erhalten.

In einer weiteren, besonders bevorzugten Ausführungsform umfasst die Synchronisationsinformation der ersten und zweiten Synchronisationsnachricht die Masterzeit zum Zeitpunkt des Aussendens der entsprechenden ersten bzw. zweiten Synchronisationsnachricht sowie zumindest ein Korrekturfeld, zu dem ein jeweiliger Slaveknoten beim Weiterleiten einer ersten bzw. zweiten Synchronisationsnachricht seine interne Verarbeitungszeit und die vorbestimmte Übertragungszeit hinzuaddiert. Vorzugsweise umfasst das zumindest eine Korrekturfeld dabei ein erstes Feld, in dem ausschließlich die internen Verarbeitungszeiten addiert werden, sowie ein zweites Feld, in dem ausschließlich die vorbestimmten Übertragungszeiten addiert werden.

In einer weiteren Ausführungsform ermittelt ein jeweiliger Slaveknoten eine Slavezeit mittels eines geschätzten RCF-Faktors (RCF = Rate Compensation Factor), der dem Verhältnis der Taktfrequenz der Masteruhr zu der Taktfrequenz der internen Uhr des jeweiligen Slaveknotens entspricht. Der RCF-Faktor bzw. dessen Schätzung ist dabei hinlänglich aus dem Stand der Technik bekannt und wird nicht weiter im Detail beschrieben. Herkömmlicherweise wird zur Schätzung des RCF-Faktors sowohl die Übertragungszeit zwischen benachbarten Knoten als auch die interne Verarbeitungszeit herangezogen. In einer bevorzugten Variante der Erfindung, bei der ein erstes und ein zweites Feld als Korrekturfelder in den Synchronisationsnachrichten vorgesehen sind, wird der RCF-Faktor nur unter Verwendung des ersten Felds geschätzt. Hierdurch wird sichergestellt, dass bei der Schätzung des RCF-Faktors nicht die vorbestimmten Übertragungszeiten einfließen, die nicht den tatsächlichen Übertragungszeiten entsprechen. Auf diese Weise wird eine genaue Schätzung des RCF-Faktors sichergestellt.

In einer weiteren Ausgestaltung der Erfindung, bei der eine Ringtopologie verwendet wird, umfasst die Synchronisationsinformation der ersten Synchronisationsnachricht keine Information zur Übertragungszeit entlang von Kommunikationspfaden. Innerhalb eines Zyklus der Übermittlung einer ersten und zweiten Synchronisationsnachricht durch die geschlossene Topologie addiert dabei ein jeweiliger Slaveknoten beim Weiterleiten der ersten Synchronisationsnachricht zu der Synchronisationsinformation ausschließlich seine interne Verarbeitungszeit zwischen Empfang und Aussenden der ersten Synchronisationsnachrichten hinzu. In Analogie addiert der jeweilige Slaveknoten beim Weiterleiten einer zweiten Synchronisationsnachricht zu der Synchronisationsinformation ausschließlich seine interne Verarbeitungszeit zwischen Empfang und Aussenden der zweiten Synchronisationsnachricht hinzu. Jedoch überträgt der jeweilige Slaveknoten ferner eine im Masterknoten geschätzte akkumulierte Übertragungszeit entlang aller Kommunikationspfade der geschlossenen Topologie als Teil der Synchronisationsinformation der zweiten Synchronisationsnachricht. Vorzugsweise wird die akkumulierte Übertragungszeit dabei zu der Masterzeit zum Zeitpunkt des Aussendens der zweiten Synchronisationsnachricht hinzuaddiert. Hierdurch kann auf einfache Weise auch ohne die Übertragung von vorbestimmten mittleren Übertragungszeiten eine genaue Synchronisation auf die Masterzeit erreicht werden.

In einer bevorzugten Variante ermittelt ein jeweiliger Slaveknoten wiederum eine Slavezeit mittels des bereits oben beschriebenen geschätzten RCF-Faktors. Dabei wird der RCF-Faktor vorzugsweise nur unter Verwendung der internen Verarbeitungszeit in den ersten und/oder zweiten Synchronisationsnachrichten ohne Berücksichtigung von Übertragungszeiten entlang von Kommunikationspfaden ermittelt.

In einer weiteren Variante des erfindungsgemäßen Verfahrens, bei dem als geschlossene Topologie eine Linientopologie verwendet wird, umfasst die Synchronisationsinformation sowohl der ersten als auch der zweiten Synchronisationsnachricht eine erste und zweite Synchronisationsinformation. Die erste Synchronisationsinformation umfasst keine Information zu Übertragungszeiten entlang von Kommunikationspfaden. Ein jeweiliger Slaveknoten addiert beim Weiterleiten sowohl einer ersten als auch einer zweiten Synchronisationsnachricht zu der ersten Synchronisationsinformation ausschließlich eine interne Verarbeitungszeit zwischen Empfang und Aussenden der ersten bzw. zweiten Synchronisationsnachricht hinzu und übermittelt ferner als zweite Synchronisationsinformation eine im Masterknoten geschätzte akkumulierte Übertragungszeit entlang aller Kommunikationspfade. Dabei wird die erste Zeit basierend auf der ersten Synchronisationsinformation der im jeweiligen Slaveknoten empfangenen ersten Synchronisationsnachricht und die zweite Zeit basierend auf der ersten und zweiten Synchronisationsinformation der im jeweiligen Slaveknoten empfangenen zweiten Synchronisationsnachricht ermittelt.

In einer bevorzugten Variante der obigen Ausführungsform ermittelt der jeweilige Slaveknoten wiederum eine Slavezeit mittels eines geschätzten RCF-Faktors. Der RCF-Faktor wird dabei vorzugsweise nur unter Verwendung der ersten Synchronisationsinformation ohne Berücksichtigung der zweiten Synchronisationsinformation ermittelt, wodurch eine genaue Schätzung des RCF-Faktors erreicht wird.

Das erfindungsgemäße Verfahren kann in verschiedenen Standards zur Zeitsynchronisation eingesetzt werden, insbesondere im Standard IEEE 1588 oder IEC 61588 (insbesondere IEC 61588 Type 10) oder IEEE 802.1AS. In einer weiteren bevorzugten Variante kommunizieren die Netzknoten in dem Kommunikationsnetz basierend auf dem an sich bekannten PROFINET-Standard.

Ein bevorzugter Anwendungsfall des erfindungsgemäßen Verfahrens ist die Zeitsynchronisation in einem industriellen Automatisierungssystem, in dem Arbeitsabläufe von verschiedenen Netzknoten in der Regel oft zeitgenau aufeinander abgestimmt sein müssen.

Neben dem oben beschriebenen Verfahren umfasst die Erfindung ferner ein Kommunikationsnetz, das eine Vielzahl von Netzknoten mit einem Masterknoten und mehreren Slaveknoten umfasst, wobei der Masterknoten eine Masterzeit mit einer ersten Uhr erfassen kann und jeder Slaveknoten eine Slavezeit mit einer internen Uhr erfassen kann, wobei Synchronisationsnachrichten im Kommunikationsnetz übertragbar sind, wobei die in einem Slaveknoten empfangene Synchronisationsnachricht eine Synchronisationsinformation enthält, welche zur Synchronisierung der Slavezeit des Slaveknotens auf die Masterzeit verwendet wird. Das Kommunikationsnetz ist dabei derart ausgestaltet, dass in dem Kommunikationsnetz das erfindungsgemäße Verfahren bzw. eine oder mehrere bevorzugte Varianten des erfindungsgemäßen Verfahrens durchführbar sind.

Ausführungsbeispiele der Erfindung werden nachfolgend anhand der beigefügten Figuren detailliert beschrieben.

Es zeigen:

Fig. 1 ein Beispiel einer Ringtopologie, in der Ausführungsformen des erfindungsgemäßen Verfahrens durchgeführt werden; und

Fig. 2 ein Beispiel einer Linientopologie, in der Ausführungsformen des erfindungsgemäßen Verfahrens durchgeführt werden.

Die nachfolgend beschriebenen Ausführungsformen des erfindungsgemäßen Verfahrens dienen dazu, in einem Kommunikationsnetz aus einem Masterknoten und mehreren Slaveknoten die von den Slaveknoten gemessenen Slavezeiten auf die vom Masterknoten gemessene Masterzeit zu synchronisieren. Jeder Slaveknoten umfasst dabei eine interne Uhr mit einer entsprechenden Taktfrequenz zur Erfassung der Slavezeit. Ebenso ist in dem Masterknoten eine Masteruhr mit einer Taktfrequenz zur Messung der Masterzeit vorgesehen.

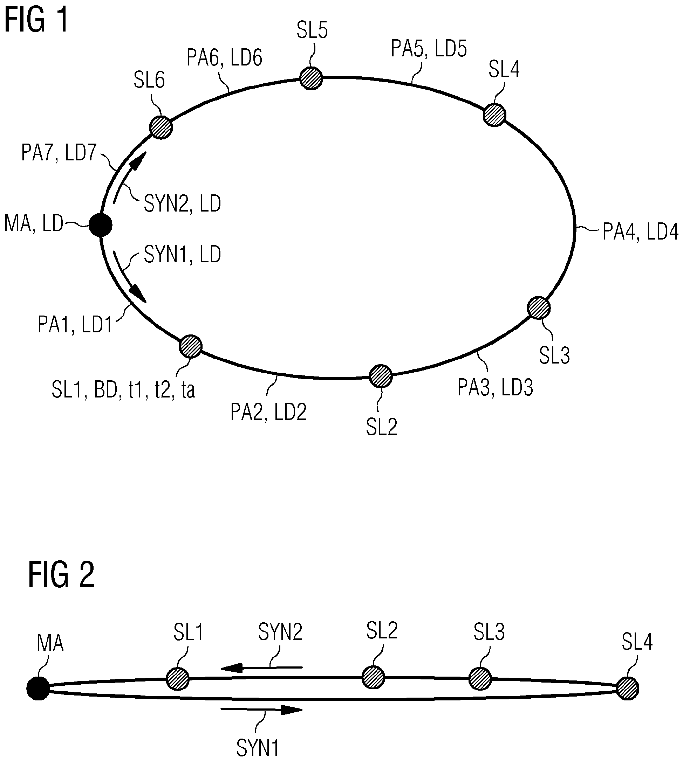

Zunächst wird eine Variante des erfindungsgemäßen Verfahrens basierend auf der Ringtopologie der Fig. 1 erläutert. In dieser Topologie sind ein Masterknoten MA sowie sechs Slaveknoten SL1, SL2, ..., SL6 vorgesehen, wobei die Anzahl der Slaveknoten lediglich beispielhaft ist. Der Masterknoten und die Slaveknoten sind in einem Ring aus sieben Kommunikationspfaden PA1 bis PA7 angeordnet, so dass eine vom Masterknoten ausgesendete und aufeinander folgend von den Slaveknoten weitergeleitete Nachricht in beiden Richtungen des Rings wieder zum Masterknoten zurückgelangt. Zur Synchronisierung werden Synchronisationsnachrichten verwendet, wobei Synchronisationsnachrichten SYN1 in Richtung nach links im Ring vom Masterknoten ausgesendet und von den Slaveknoten weitergeleitet werden und Synchronisationsnachrichten SYN2 in Richtung nach rechts im Ring von dem Masterknoten ausgesendet und von den Slaveknoten weitergeleitet werden.

Herkömmlicherweise wird eine Synchronisationsnachricht vom Masterknoten zu den Slaveknoten weitergeleitet, wobei jeder Slaveknoten eine interne Verarbeitungszeit (sog. Bridge-Delay) sowie eine Zeitverzögerung der Übertragung vom vorhergehenden Knoten zu sich (sog. Line-Delay) zu einem entsprechenden Korrekturfeld hinzuaddiert. Dabei wird die Line-Delay separat mit einem gesonderten Verfahren in jedem Slaveknoten abgeschätzt. Auf eine solche Abschätzung der Line-Delay kann im erfindungsgemäßen Verfahren verzichtet werden, wie im Folgenden näher erläutert wird.

Der Masterknoten MA schickt gemäß Fig. 1 in einem Zyklus die erste Synchronisationsnachricht SYN1 in Richtung links durch den Ring und die zweite Synchronisationsnachricht SYN2 in Richtung rechts durch den Ring, wie mit entsprechenden Pfeilen angedeutet ist. Die Synchronisationsnachricht SYN1 wird entlang der Pfade PA1, PA2, ..., PA7 zu dem Masterknoten zurückübertragen. Ebenso wird die Synchronisationsnachricht SYN2 über die Pfade PA7, PA6, ..., PA1 zurück zu dem Masterknoten übermittelt. Die einzelnen tatsächlichen Line-Delays auf den einzelnen Kommunikationspfaden PA1 bis PA7 sind in Fig. 1 mit LD1 bis LD7 bezeichnet. Zu Beginn eines Zyklus wird in dem Masterknoten MA eine vorbestimmte Übertragungszeit bzw. Line-Delay LD festgelegt bzw. ermittelt, die innerhalb der Synchronisationsnachrichten SYN1 und SYN2 von Knoten zu Knoten übermittelt wird. Jeder Slaveknoten addiert dabei diese Line-Delay zu einem Korrekturfeld der Synchronisationsnachricht SYN1 bzw. SYN2 hinzu. In gleicher Weise addiert auch jeder Slaveknoten eine entsprechende Bridge-Delay zu dem Korrekturfeld bzw. einem separaten Korrekturfeld hinzu. In Fig. 1 ist lediglich für den Knoten SL1 die Bridge-Delay mit BD bezeichnet. Die Bridge-Delay kann dabei von Knoten zu Knoten unterschiedlich sein.

Empfängt der Masterknoten MA schließlich die Synchronisationsnachricht SYN1 bzw. SYN2, addiert er ebenfalls die Line-Delay LD zu dem Wert des entsprechenden Korrekturfelds hinzu und bestimmt anschließend den Fehler zwischen der tatsächlichen akkumulierten Verzögerungszeit entsprechend den Line-Delays LD1 bis LD7 und der Verzögerungszeit entsprechend der Summe der Line-Delays LD. Dabei ist zu berücksichtigen, dass jede Synchronisationsnachricht die Masterzeit beim Aussenden der Nachricht beim Masterknoten umfasst. Demzufolge kann der Masterknoten bei Wiederempfang der Synchronisationsnachricht die Differenz zwischen der Masterzeit beim Wiederempfang und der Masterzeit beim Aussenden der Nachricht bestimmen und von dieser Differenz die Summe der Line-Delays LD und Bridge-Delays BD entlang der Pfade PA1 bis PA7 abziehen, was dem oben genannten Fehler entspricht.

Mittels eines Reglers ermittelt der Masterknoten dann für die ersten bzw. zweiten Synchronisationsnachrichten SYN1 und SYN2 eine neue Line-Delay, die er im nächsten Zyklus in den entsprechenden Synchronisationsnachrichten übermittelt und welche dann wieder von den Slaveknoten in einem entsprechenden Korrekturfeld aufaddiert wird. In der hier beschriebenen Ausführungsform wird ein I-Regler basierend auf folgender Formel zur Berechnung einer neuen Line-Delay verwendet:

$$LD(k+1) = LD(k) + k_i \cdot e(k).$$

Dabei bezeichnet LD(k) die vorgegebene Übertragungszeit im k-ten Zyklus und e(k) den oben beschriebenen Fehler im k-ten Zyklus. Der Fehler kann dabei basierend auf einer empfangenen ersten oder zweiten Synchronisationsnachricht bestimmt sein. LD(k+1) ist die im (k+1)-ten Zyklus zu verwendende Line-Delay und $k_i$ ist ein vorbestimmter Faktor, der derart gewählt ist, dass die Regelung stabil ist. Dies ist dann gewährleistet, wenn $|1-k_i \cdot (N+1)| < 1$ gilt, wobei N die Anzahl der Slaveknoten im entsprechenden Ring ist.

Mit dem oben beschriebenen Regler stellt sich nach einer Initialisierungsphase von mehreren Zyklen ein Wert für LD ein, der der mittleren Übertragungszeit in dem Ring entlang eines Kommunikationspfads zwischen zwei benachbarten Knoten entspricht. Wird das Verfahren mit LD=0 gestartet (d.h. LD(0)=0), wird in einer bevorzugten Ausführungsform der obige Regler erst zur Bestimmung von LD(2) verwendet und LD(1) wird wie folgt gewählt:

$$LD(1) = e(0)/(N+1).$$

Dies ist immer dann möglich, wenn die Anzahl N der Slaveknoten im Masterknoten bekannt ist.

Im Rahmen der Synchronisierung bestimmt nunmehr jeder Slaveknoten basierend auf der (akkumulierten) Line-Delay und Bridge-Delay in der empfangenen Synchronisationsnachricht SYN1 eine erste Zeit t1 und basierend auf der (akkumulierten) Line-Delay und der Bridge-Delay in der empfangenen Synchronisationsnachricht SYN2 eine zweite Zeit t2. Das heißt, die erste Zeit t1 ist auf die Synchronisationsinformation der ersten Synchronisationsnachricht SYN1 und die zweite Zeit t2 auf die Synchronisationsinformation der zweiten Synchronisationsnachricht SYN2 synchronisiert. Die Ermittlung solcher synchronisierter Zeiten ist an sich bekannt. Ein Slaveknoten korrigiert dabei seine Slavezeit unter Verwendung der Line-Delay und Bridge-Delay in den empfangenen Synchronisationsnachrichten. Anschließend wird der arithmetische Mittelwert ta aus t1 und t2 im entsprechenden Slaveknoten gebildet. In Fig. 1 sind die Zeiten t1, t2 und ta dabei nur für den Slaveknoten SL1 angedeutet. Der Mittelwert ta stellt zwangsläufig die synchronisierte Masterzeit dar, wie durch folgende Überlegung begründet werden kann.

Betrachtet man den Slaveknoten SLi, so wurde bei der Weiterleitung der Synchronisationsnachricht SYN1 folgender Fehler err1 gemacht:

$$err1 = i \cdot LD-(LD1+LD2+\ldots+LDi).$$

Demgegenüber wurde bei Weiterleitung der Synchronisationsnachricht SYN2 der folgende Fehler err2 gemacht:

$$err2 = (N+1-i) \cdot LD-(LD(i+1)+\ldots+LD(N+1)).$$

Bei der Mittelwertbildung der Zeiten t1 und t2 werden diese beiden Fehler ebenfalls gemittelt. Da die Summe aus allen Line-Delays LD1 bis LD(N+1) der Summe der Line-Delays LD entspricht (so wurde die Line-Delay LD vom Masterknoten gemäß dem obigen Regler bestimmt), verschwindet dieser Fehler bei der Mittelung, wie sich aus folgender Formel ergibt:

$$err1+err2 = (N+1) \cdot LD-(LD1+\ldots+LD(N+1)) = 0.$$

Somit kann auf einfache Weise in jedem der Slaveknoten die synchronisierte Masterzeit ermittelt werden, ohne dass die einzelnen Line-Delays LD1 bis LD(N+1) explizit bestimmt werden müssen.

Das obige Verfahren kann in einfacher Weise anstatt auf eine Ringtopologie auch auf eine Linientopologie angewendet werden. Eine solche Linientopologie ist in Fig. 2 gezeigt. Aus Übersichtlichkeitsgründen wurden in Fig. 2 Bezugszeichen für die entsprechenden Line-Delays, Bridge-Delays sowie Kommunikationspfade weggelassen. In Analogie zu Fig. 1 ist der Masterknoten mit MA und die entsprechenden Slaveknoten mit SL1, SL2 bis SL4 bezeichnet. Der Masterknoten MA schickt eine Synchronisationsnachricht in der Form einer Synchronisationsnachricht SYN1 immer in Richtung des Knotens SL1, wobei die Nachricht von dort über die Knoten SL2 und SL3 zum Knoten SL4 weitergeleitet wird. Der Knoten SL4 stellt dabei eine reflektierten Knoten dar, der die Nachricht dann wieder über die Knoten SL3, SL2 und SL1 zurück zum Masterknoten MA schickt. Gemäß der obigen Terminologie sind dabei erste Synchronisationsnachrichten SYN1 solche Nachrichten, die vom Masterknoten zum reflektierten Slaveknoten SL4 übertragen werden und Synchronisationsnachrichten SYN2 solche Synchronisationsnachrichten, die vom reflektierenden Slaveknoten zurück zum Masterknoten MA übertragen werden.

In Analogie zu Fig. 1 ist dabei wiederum eine Line-Delay LD vorgegeben, die innerhalb der ersten und zweiten Synchronisationsnachrichten SYN1 und SYN2 übertragen wird, wobei jeder Slaveknoten in einem entsprechenden Korrekturfeld die Line-Delay LD sowie seine Bridge-Delay BD zu der empfangenen ersten bzw. zweiten Synchronisationsnachricht hinzuaddiert. Die Bestimmung der Line-Delay LD ist genauso wie in dem Verfahren der Fig. 1 ausgestaltet, d.h. der Masterknoten MA ermittelt diese Line-Delay mit einem entsprechenden Regler, der diese Line-Delay auf die mittlere Übertragungszeit in der Linientopologie entlang eines Kommunikationspfads zwischen zwei benachbarten Knoten regelt.

In der Linientopologie der Fig. 2 ermittelt jeder der Slaveknoten SL1 bis SL3, der sowohl die erste Synchronisationsnachricht SYN1 als auch die zweite Synchronisationsnachricht SYN2 empfängt, die oben beschriebene erste Zeit t1, die auf die erste Synchronisationsnachricht synchronisiert ist, sowie die zweite Zeit t2, die auf die zweite Synchronisationsnachricht synchronisiert ist. Durch Mittelwertbildung dieser Zeiten erhält man wiederum die synchronisierte Masterzeit. Für den Slaveknoten SL4 kann nur die erste Zeit t1 basierend auf der Synchronisationsnachricht SYN1 ermittelt werden. Da der Slaveknoten SL4 der reflektierende Knoten in der Linientopologie ist, entspricht diese Zeit zwangsläufig der synchronisierten Masterzeit.

Wie bereits oben erwähnt, kann die Summation der Line-Delays und der Bridge-Delays beim Weiterleiten der Synchronisationsnachrichten gegebenenfalls in getrennten Korrekturfeldern dieser Nachrichten erfolgen. Diese Variante hat den Vorteil, dass eine lokale RCF-Schätzung der Slaveknoten entkoppelt von der Schätzung der Line-Delays durchgeführt werden kann. Der RCF-Faktor (RCF = Rate Compensation Factor) gibt dabei das Verhältnis zwischen der Taktfrequenz der Masteruhr und der entsprechenden internen Uhr des Slaveknotens an. Entsprechende Verfahren zur Schätzung dieses Werts sind an sich aus dem Stand der Technik bekannt. Üblicherweise werden im Stand der Technik bei einer RCF-Schätzung sowohl die Line-Delays als auch die Bridge-Delays berücksichtigt. Bei der Speicherung der summierten Line-Delays bzw. Bridge-Delays in separaten Feldern kann die RCF-Schätzung nur basierend auf den Bridge-Delays erfolgen. Das heißt, die summierten Line-Delays, welche nicht der tatsächlichen Line-Delay entsprechen, werden bei der RCF-Schätzung ausgeblendet, wodurch die Schätzung genauer wird.

Im Folgenden werden Alternativen zu den oben beschriebenen Verfahren anhand einer Ringtopologie erläutert. In Analogie zu dem Verfahren der Fig. 1 werden Synchronisationsnachrichten SYN1 links entlang des Rings und Synchronisationsnachrichten SYN2 rechts entlang des Rings weitergeleitet. In einem Zyklus wird dabei ohne Beschränkung der Allgemeinheit zunächst die Synchronisationsnachrichten SYN1 und erst anschließend die Synchronisationsnachrichten SYN2 übermittelt. Die Nachrichten SYN1 beinhaltet die Masterzeit beim Aussenden der Nachricht beim Master. Die Slaveknoten kompensieren bei der Weiterleitung der Synchronisationsnachricht SYN1 nur die Bridge-Delays, indem sie ihre Bridge-Delay zu einem entsprechenden Korrekturfeld hinzuaddieren. Eine lokale Kompensation der Line-Delays findet nicht statt. Bei Wiedereintreffen der Synchronisationsnachricht SYN1 im Masterknoten MA schätzt der Masterknoten mit an sich bekannten Verfahren die akkumulierte Line-Delay entlang aller Übertragungspfade im Ring (z.B. mit einem Filter oder einem Regler). Die akkumulierte Line-Delay ergibt sich dabei aus der Differenz zwischen der Masterzeit beim Wiedereintreffen der Nachricht SYN1 und der Summe aus der Masterzeit beim Aussenden der Nachricht SYN1 beim Master und den akkumulierten Bridge-Delays im entsprechenden Korrekturfeld. Die Masterzeit beim Aussenden der Nachricht SYN1 wird dabei innerhalb der Nachricht SYN1 übermittelt. Gegebenenfalls kann die Bridge-Delay bei jedem Weiterleiten der Nachricht auch direkt zu der Masterzeit addiert werden.

Anschließend werden die Synchronisationsnachrichten SYN2 rechtsrum im Ring ausgehend vom Masterknoten MA übermittelt. Diese Nachrichten beinhalten die geschätzte akkumulierte Line-Delay. Dabei kann diese Line-Delay zu der Zeit des Masters beim Aussenden der Nachricht SYN2 hinzuaddiert werden. In diesem Fall wird kein separates Feld zur Übermittlung der akkumulierten Line-Delays benötigt. Ferner werden auch die akkumulierten Bridge-Delays wieder in einem entsprechenden Korrekturfeld der Nachricht SYN2 gespeichert oder direkt zur Masterzeit hinzuaddiert.

In Analogie zu dem oben beschriebenen Verfahren bestimmt dann jeder Slaveknoten wiederum eine erste Zeit t1 basierend auf der Synchronisationsinformation aus der ersten Synchronisationsnachricht SYN1 und eine zweite Zeit t2 basierend auf der Synchronisationsinformation aus der zweiten Synchronisationsnachricht SYN2. Anschließend bildet der jeweilige Slaveknoten den Mittelwert aus den Zeiten t1 und t2. Dieser Mittelwert ta entspricht dann wiederum der synchronisierten Masterzeit, wie sich aus nachfolgenden Überlegungen ergibt.

Bei der Anwendung des obigen Verfahrens ergeben sich für die Zeiten t1 bzw. t2 die folgenden Fehler err1 bzw. err2 im Slaveknoten SLi:

$$err1 = 0 \cdot LD - (LD1 + LD2 + \ldots + LDi),$$

$$err2 = (N+1) \cdot LD - (LD(i+1) + \ldots + LD(N+1)).$$

Die Summe dieser beiden Fehler verschwindet bei der Mittelwertbildung über die Zeiten t1 und t2, so dass an jeden Slaveknoten die korrekte Masterzeit rekonstruiert wird.

Das soeben beschriebene Verfahren kann gegebenenfalls statt in einer Ringtopologie auch in einer Linientopologie entsprechend der Fig. 2 angewendet werden. In diesem Fall wird sowohl in der Synchronisationsnachricht SYN1 als auch in der Synchronisationsnachricht SYN2 die akkumulierte Bridge-Delay als auch die geschätzte akkumulierte Line-Delay übermittelt. Die erste Zeit t1 gemäß einer empfangenen ersten Synchronisationsnachricht SYN1 wird dabei lediglich basierend auf der akkumulierten Bridge-Delay ohne Berücksichtigung der akkumulierten Line-Delay ermittelt, wohingegen die zweite Zeit t2 basierend auf sowohl der akkumulierten Bridge-Delay als auch der akkumulierten Line-Delay einer empfangenen zweiten Synchronisationsnachricht SYN2 bestimmt wird.

Die oben beschriebenen alternativen Varianten weisen den Vorteil auf, dass gegebenenfalls keine zusätzlichen Felder in den Synchronisationsnachrichten benötigt werden. Insbesondere muss keine gemittelte Line-Delay zwischen den Knoten übermittelt werden. Darüber hinaus können bei der Schätzung des RCF-Werts in einem jeweiligen Slaveknoten wiederum nur die Bridge-Delays verwendet werden.

In allen im Vorangegangenen beschriebenen Varianten des erfindungsgemäßen Verfahrens entfällt eine lokale Bestimmung der Line-Delays in einzelnen Netzknoten. Die Bestimmung von lokalen Line-Delays weist den Nachteil auf, dass dabei auftretende Fehler durch die Slaveknoten im Betrieb nicht erkannt werden. Stattdessen wird der Fehler an den nächsten Slaveknoten weitergegeben. Erfindungsgemäß werden solche Fehler vermieden, denn der Masterknoten stellt durch entsprechende Modifikation der übermittelten Line-Delays sicher, dass die Line-Delays im Mittel richtig bestimmt und kompensiert werden. Daher kann eine bessere Genauigkeit als mit herkömmlichen Verfahren erreicht werden.

**Patentansprüche**

1. Verfahren zur Zeitsynchronisation in einem Kommunikationsnetz, das eine Vielzahl von Netzknoten (MA, SL1, SL2, ...,SL6) mit einem Masterknoten (MA) und mehreren Slaveknoten (SL1, SL2, ..., SL6) umfasst, wobei der Masterknoten (MA) eine Masterzeit mit einer Masteruhr erfasst und jeder Slaveknoten (SL1, SL2, ..., SL6) eine Slavezeit mit einer internen Uhr erfasst, wobei Synchronisationsnachrichten (SYN1, SYN2) im Kommunikationsnetz übertragen werden und die in einem Slaveknoten (SL1, SL2, ..., SL6) empfangene Synchronisationsnachricht (SYN1, SYN2) eine Synchronisationsinformation enthält, welche zur Synchronisierung der Slavezeit des Slaveknotens (SL1, SL2, ..., SLN) auf die Masterzeit verwendet wird, bei dem:

   - eine geschlossene Topologie aus Kommunikationspfaden (PA1, PA2, ..., PA7) zwischen benachbarten Netzknoten (MA, SL1, SL2, ...,SL6) vorgegeben wird, wobei die geschlossene Topologie eine erste Übertragungsrichtung und eine entgegengesetzte zweite Übertragungsrichtung zwischen benachbarten Netzknoten (MA, SL1, SL2, ...,SL6) festlegt;
   - ausgehend von dem Masterknoten (MA) die Synchronisationsnachrichten (SYN1, SYN2) derart in der geschlossenen Topologie weitergeleitet werden, dass zumindest ein Teil der Slaveknoten (SL1, SL2, ..., SL6) jeweils eine erste Synchronisationsnachricht (SYN1) aus der ersten Übertragungsrichtung und eine zweite Synchronisationsnachricht (SYN2) aus der zweiten Übertragungsrichtung empfängt;
   - ein jeweiliger Slaveknoten (SL1, SL2, ..., SL6) des zumindest einen Teils der Slaveknoten (SL1, SL2, ..., SL6) eine erste Zeit (t1) bestimmt, welche basierend auf der Synchronisationsinformation der ersten Synchronisationsnachricht (SYN1) synchronisiert ist, sowie eine zweite Zeit (t2), welche basierend auf der Synchronisationsinformation der zweiten Synchronisationsnachricht (SYN2) synchronisiert ist;
   - eine gemittelte Zeit (ta) durch arithmetische Mittelung der ersten und zweiten Zeit (t1, t2) bestimmt wird, wobei die Synchronisationsinformationen der ersten und zweiten Synchronisationsnachricht (SYN1, SYN2) derart ausgestaltet sind, dass die gemittelte Zeit (ta) der Masterzeit entspricht,

   **dadurch gekennzeichnet, dass**

   - innerhalb eines Zyklus der Übermittlung einer ersten und zweiten Synchronisationsnachricht (SYN1, SYN2) durch die geschlossene Topologie ein jeweiliger Slaveknoten (SL1, SL2, ..., SL6) beim Weiterleiten der ersten und zweiten Synchronisationsnachricht (SYN1, SYN2) zu der Synchronisationsinformation eine interne Verarbeitungszeitzeit (BD) zwischen Empfang und Aussenden der ersten bzw. zweiten Synchronisationsnachricht (SYN1, SYN2) sowie eine vorbestimmte, innerhalb des Zyklus feste Übertragungszeit (LD) hinzuaddiert, wobei die vorbestimmte Übertragungszeit (LD) im Masterknoten (MA) auf die mittlere Übertragungszeit der ersten bzw. zweiten Synchronisationsnachricht entlang eines Kommunikationspfades (PA1, PA2, ..., PA7) eingestellt oder geregelt wird.

2. Verfahren nach Anspruch 1, bei dem die geschlossene Topologie eine Ringtopologie ist, wobei der Masterknoten (MA) die erste Synchronisationsnachricht (SYN1) in die erste Übertragungsrichtung der Ringtopologie und die zweite Synchronisationsnachricht (SYN2) in die zweite Übertragungsrichtung der Ringtopologie versendet.

3. Verfahren nach Anspruch 1 oder 2, bei dem die geschlossene Topologie eine Linientopologie ist, welche von dem Masterknoten (MA) in die erste Übertragungsrichtung zu einem reflektierenden Slaveknoten (SL4) und von dort wieder zurück zu dem Masterknoten (MA) führt, wobei der Masterknoten (MA) die erste Synchronisationsnachricht (SYN1) in die erste Übertragungsrichtung aussendet, wobei die erste Synchronisationsnachricht (SYN1) beim Weiterleiten durch den reflektierende Slaveknoten (SL4) zur zweiten Synchronisationsnachricht (SYN2) wird.

4. Verfahren nach einem der vorhergehenden Ansprüche, bei dem die Regelung auf die mittlere Übertragungszeit (LD) derart erfolgt, dass der Masterknoten (MA) aus der in einem Zyklus empfangenen ersten oder zweiten Synchronisationsnachricht (SYN1, SYN2) einen Fehler zwischen der tatsächlichen akkumulierten Übertragungszeit entlang aller Kommunikationspfade (PA1, PA2, ..., PA7) der geschlossenen Topologie und der akkumulierten Übertragungszeit entsprechend der Synchronisationsinformation aus der ersten oder zweiten Synchronisationsnachricht (SYN1, SYN2) bestimmt, wobei in dem Masterknoten (MA) eine neue mittlere Übertragungszeit für den nächsten Zyklus basierend auf dem Fehler ermittelt wird.

5. Verfahren nach Anspruch 4, bei dem die Regelung auf die mittlere Übertragungszeit (LD) wie folgt lautet:

$$LD(k+1) = LD(k) + k_i \cdot e(k)$$

wobei LD(k) die mittlere Übertragungszeit für den aktuellen Zyklus ist;
wobei LD(k+1) die neue mittlere Übertragungszeit für den nächsten Zyklus ist;
wobei e(k) der Fehler zwischen der tatsächlichen akkumulierten Übertragungszeit und der akkumulierten Übertragungszeit entsprechend der Synchronisationsinformation ist;
wobei $k_i$ ein Regelparameter ist.

6. Verfahren nach einem der vorhergehenden Ansprüche, bei dem die vorbestimmte Übertragungszeit (LD) in einem Feld der ersten und zweiten Synchronisationsnachricht (SYN1, SYN2) übermittelt wird.

7. Verfahren nach einem der vorhergehenden Ansprüche, bei dem die Synchronisationsinformation der ersten und zweiten Synchronisationsnachricht (SYN1, SYN2) die Masterzeit zum Zeitpunkt des Aussendens der ersten bzw. zweiten Synchronisationsnachricht (SYN1, SYN2) beim Master (MA) sowie zumindest ein Korrekturfeld umfasst, zu dem ein jeweiliger Slaveknoten (SL1, SL2, ..., SL6) beim Weiterleiten einer ersten bzw. zweiten Synchronisationsnachricht (SYN1, SYN2) seine interne Verarbeitungszeit (BD) und die vorbestimmte Übertragungszeit (LD) hinzuaddiert.

8. Verfahren nach Anspruch 7, bei dem das zumindest eine Korrekturfeld ein erstes Feld umfasst, in dem ausschließlich die internen Verarbeitungszeiten (BD) addiert werden, sowie ein zweites Feld, in dem ausschließlich die vorbestimmten Übertragungszeiten (LD) addiert werden.

9. Verfahren nach einem der vorhergehenden Ansprüche, bei dem ein jeweiliger Slaveknoten (SL1, SL2, ..., SL6) eine Slavezeit mittels eines geschätzten RCF-Faktors ermittelt, der dem Verhältnis der Taktfrequenz der Masteruhr zu der Taktfrequenz der internen Uhr des jeweiligen Slaveknotens (SL1, SL2, ..., SL6) entspricht, wobei der RCF-Faktor vorzugsweise nur unter Verwendung des ersten Felds geschätzt wird.

10. Verfahren nach einem der vorhergehenden Ansprüche in Kombination mit Anspruch 2, bei dem die Synchronisationsinformation der ersten Synchronisationsnachricht (SYN1, SYN2) keine Information zu Übertragungszeiten entlang von Kommunikationspfaden (PA1, PA2, ..., PA7) umfasst, wobei innerhalb eines Zyklus der Übermittlung einer ersten und zweiten Synchronisationsnachricht (SYN1, SYN2) durch die geschlossene Topologie ein jeweiliger Slaveknoten (SL1, SL2, ..., SL6) beim Weiterleiten der ersten Synchronisationsnachricht (SYN1) zu der Synchronisationsinformation ausschließlich seine interne Verarbeitungszeit (BD) zwischen Empfang und Aussenden der ersten Synchronisationsnachricht (SYN1, SYN2) hinzuaddiert und der jeweilige Slaveknoten (SL1, SL2, ..., SL6) beim Weiterleiten einer zweiten Synchronisationsnachricht (SYN2) zu der Synchronisationsinformation ausschließlich seine interne Verarbeitungszeit (BD) zwischen Empfang und Aussenden der zweiten Synchronisationsnachricht (SYN1, SYN2) hinzuaddiert und ferner eine im Masterknoten (MA) geschätzte akkumulierte Übertragungszeit entlang aller Kommunikationspfade (PA1, PA2, ..., PA7) der geschlossenen Topologie als Teil der Synchronisationsinformation der zweiten Synchronisationsnachricht (SYN2) überträgt.

**11.** Verfahren Anspruch 10, bei dem ein jeweiliger Slaveknoten (SL1, SL2, ..., SL6) eine Slavezeit mittels eines geschätzten RCF-Faktors ermittelt, der dem Verhältnis der Taktfrequenz der Masteruhr zu der Taktfrequenz der internen Uhr des jeweiligen Slaveknotens (SL1, SL2, ..., SL6) entspricht, wobei der RCF-Faktor vorzugsweise nur unter Verwendung der internen Verarbeitungszeiten (BD) in den ersten und/oder zweiten Synchronisationsnachrichten (SYN1, SY2) ohne Berücksichtigung von Übertragungszeiten entlang von Kommunikationspfaden (PA1, PA2, ..., PA7) ermittelt wird.

**12.** Verfahren nach einem der vorhergehenden Ansprüche in Kombination mit Anspruch 3, bei dem die Synchronisationsinformation sowohl der ersten als auch der zweiten Synchronisationsnachricht (SYN1, SYN2) eine erste und eine zweite Synchronisationsinformation umfasst, wobei die erste Synchronisationsinformation keine Information zu Übertragungszeiten entlang von Kommunikationspfaden (PA1, PA2, ..., PA7) umfasst, wobei ein jeweiliger Slaveknoten (SL1, SL2, ..., SL6) beim Weiterleiten sowohl einer ersten als auch einer zweiten Synchronisationsnachricht (SYN1, SYN2) zu der ersten Synchronisationsinformation ausschließlich eine interne Verarbeitungszeit (BD) zwischen Empfang und Aussenden der ersten bzw. zweiten Synchronisationsnachricht (SYN1, SYN2) hinzuaddiert und ferner als zweite Synchronisationsinformation eine im Masterknoten (MA) geschätzte akkumulierte Übertragungszeit entlang aller Kommunikationspfade (PA1, PA2, ..., PA7) der geschlossenen Topologie übermittelt, wobei die erste Zeit (t1) basierend auf der ersten Synchronisationsinformation der im jeweiligen Slaveknoten (SL1, SL2, ..., SL6) empfangenen ersten Synchronisationsnachricht (SYN1) und die zweite Zeit (t2) basierend auf der ersten und zweiten Synchronisationsinformation der im jeweiligen Slaveknoten (SL1, SL2, ..., SL6) empfangenen zweiten Synchronisationsnachricht (SYN2) ermittelt wird.

**13.** Verfahren nach Anspruch 12, bei dem ein jeweiliger Slaveknoten (SL1, SL2, ..., SL6) eine Slavezeit mittels eines geschätzten RCF-Faktors ermittelt, der dem Verhältnis der Taktfrequenz der Masteruhr zu der Taktfrequenz der internen Uhr des jeweiligen Slaveknotens entspricht, wobei der RCF-Faktor vorzugsweise nur unter Verwendung der ersten Synchronisationsinformation ohne Berücksichtigung der zweiten Synchronisationsinformation ermittelt wird.

**14.** Verfahren nach einem der vorhergehenden Ansprüche, bei dem die Zeitsynchronisation auf dem Standard IEEE 1588 oder IEC 61588 oder IEEE 802.1AS basiert.

**15.** Verfahren nach einem der vorhergehenden Ansprüche, bei dem die Netzknoten (MA, SL1, SL2, ..., SL6) basierend auf dem PROFINET-Standard miteinander kommunizieren.

**16.** Verfahren nach einem der vorhergehenden Ansprüche, bei dem das Verfahren in einem industriellen Automatisierungssystem eingesetzt wird.

**17.** Kommunikationsnetz, das eine Vielzahl von Netzknoten (MA, SL1, SL2, ...,SL6) mit einem Masterknoten (MA) und mehreren Slaveknoten (SL1, SL2, ..., SL6) umfasst, wobei der Masterknoten (MA) eine Masterzeit mit einer ersten Uhr erfassen kann und jeder Slaveknoten (SL1, SL2, ..., SL6) eine Slavezeit mit einer internen Uhr erfassen kann, wobei Synchronisationsnachrichten (SYN1, SYN2) im Kommunikationsnetz übertragbar sind, wobei die in einem Slaveknoten (SL1, SL2, ..., SL6) empfangene Synchronisationsnachricht (SYN1, SYN2) eine Synchronisationsinformation enthält, welche zur Synchronisierung der Slavezeit des Slaveknotens (SL1, SL2, ..., SLN) auf die Masterzeit verwendet wird, wobei das Kommunikationsnetz derart ausgestaltet ist, dass ein Verfahren in dem Kommunikationsnetz durchführbar ist, bei dem:

- eine geschlossene Topologie aus Kommunikationspfaden (PA1, PA2, ..., PA7) zwischen benachbarten Netzknoten (MA, SL1, SL2, ...,SL6) vorgegeben wird, wobei die geschlossene Topologie eine erste Übertragungsrichtung und eine entgegengesetzte zweite Übertragungsrichtung zwischen benachbarten Netzknoten (MA, SL1, SL2, ...,SL6) festlegt;

- ausgehend von dem Masterknoten (MA) die Synchronisationsnachrichten (SYN1, SYN2) derart in der geschlossenen Topologie weitergeleitet werden, dass zumindest ein Teil der Slaveknoten (SL1, SL2, ..., SL6) jeweils eine erste Synchronisationsnachricht (SYN1) aus der ersten Übertragungsrichtung und eine zweite Synchronisationsnachricht (SYN2) aus der zweiten Übertragungsrichtung empfängt;

- ein jeweiliger Slaveknoten (SL1, SL2, ..., SL6) des zumindest einen Teils der Slaveknoten (SL1, SL2, ..., SL6) eine erste Zeit (t1) bestimmt, welche basierend auf der Synchronisationsinformation der ersten Synchronisationsnachricht (SYN1) synchronisiert ist, sowie eine zweite Zeit (t2), welche basierend auf der Synchronisationsinformation der zweiten Synchronisationsnachricht (SYN2) synchronisiert ist;

- eine gemittelte Zeit (ta) durch arithmetische Mittelung der ersten und zweiten Zeit (t1, t2) bestimmt wird, wobei die Synchronisationsinformationen der ersten und zweiten Synchronisationsnachricht (SYN1, SYN2) derart ausgestaltet sind, dass die gemittelte Zeit (ta) der Masterzeit entspricht,

**dadurch gekennzeichnet, dass**

- innerhalb eines Zyklus der Übermittlung einer ersten und zweiten Synchronisationsnachricht (SYN1, SYN2) durch die geschlossene Topologie ein jeweiliger Slaveknoten (SL1, SL2, ..., SL6) beim Weiterleiten der ersten und zweiten Synchronisationsnachricht (SYN1, SYN2) zu der Synchronisationsinformation eine interne Verarbeitungszeitzeit (BD) zwischen Empfang und Aussenden der ersten bzw. zweiten Synchronisationsnachricht (SYN1, SYN2) sowie eine vorbestimmte, innerhalb des Zyklus feste Übertragungszeit (LD) hinzuaddiert, wobei die vorbestimmte Übertragungszeit (LD) im Masterknoten (MA) auf die mittlere Übertragungszeit der ersten bzw. zweiten Synchronisationsnachricht entlang eines Kommunikationspfades (PA1, PA2, ..., PA7) eingestellt oder geregelt wird.

18. Kommunikationsnetz nach Anspruch 17, welches zur Durchführung eines Verfahrens nach einem der Ansprüche 2 bis 16 ausgestaltet ist.

## Claims

1. Method for time synchronization in a communication network comprising a multiplicity of network nodes (MA, SL1, SL2, ..., SL6) with one master node (MA) and a plurality of slave nodes (SL1, SL2, ..., SL6), wherein the master node (MA) detects a master time with a master clock and each slave node (SL1, SL2, ..., SL6) detects a slave time with an internal clock, wherein synchronization messages (SYN1, SYN2) are transmitted in the communication network and the synchronization message (SYN1, SYN2) received in a slave node (SL1, SL2, ..., SL6) contains synchronization information which is used for synchronizing the slave time of the slave node (SL1, SL2, ..., SLN) with the master time, wherein:

- a closed topology comprising communication paths (PA1, PA2, ..., PA7) between neighboring network nodes (MA, SL1, SL2, ...,SL6) is predefined, wherein the closed topology defines a first transmission direction and an opposite second transmission direction between neighboring network nodes (MA, SL1, SL2, ..., SL6) ;

- proceeding from the master node (MA), the synchronization messages (SYN1, SYN2) are forwarded in the closed topology in such a way that at least one portion of the slave nodes (SL1, SL2, ..., SL6) in each case receives a first synchronization message (SYN1) from the first transmission direction and a second synchronization message (SYN2) from the second transmission direction;

- a respective slave node (SL1, SL2, ..., SL6) of the at least one portion of the slave nodes (SL1, SL2, ..., SL6) determines a first time (t1), which is synchronized on the basis of the synchronization information of the first synchronization message (SYN1), and a second time (t2), which is synchronized on the basis of the synchronization information of the second synchronization message (SYN2);

- an averaged time (ta) is determined by the arithmetic averaging of the first and second times (t1, t2), wherein the items of synchronization information of the first and second synchronization messages (SYN1, SYN2) are configured in such a way that the averaged time (ta) corresponds to the master time,

- **characterized in that** within a cycle of the communication of a first and second synchronization message (SYN1, SYN2) by the closed topology, a respective slave node (SL1, SL2, ..., SL6), upon forwarding the first and second synchronization messages (SYN1, SYN2), adds to the synchronization information an internal processing time (BD) between reception and emission of the first and respectively second synchronization messages (SYN1, SYN2) and also a predetermined transmission time (LD) which is fixed within the cycle, wherein the predetermined transmission time (LD) is set or controlled in the master node (MA) to the average transmission time of the first and respectively second synchronization messages along a communication path (PA1, PA2, ..., PA7) .

2. Method according to Claim 1, wherein the closed topology is a ring topology, wherein the master node (MA) sends the first synchronization message (SYN1) in the first transmission direction of the ring topology and the second synchronization message (SYN2) in the second transmission direction of the ring topology.

3. Method according to Claim 1 or 2, wherein the closed topology is a line topology leading from the master node (MA) in the first transmission direction to a reflecting slave node (SL4) and from there back again to the master node (MA), wherein the master node (MA) emits the first synchronization message (SYN1) in the first transmission direction, wherein the first synchronization message (SYN1) becomes the second synchronization message (SYN2) upon forwarding by the reflecting slave node (SL4).

4. Method according to any of the preceding claims, wherein the control to the average transmission time (LD) is effected in such a way that the master node (MA) determines, from the first or second synchronization message (SYN1, SYN2) received in a cycle, an error between the actual accumulated transmission time along all communication paths (PA1, PA2, ..., PA7) of the closed topology and the accumulated transmission time corresponding to the synchronization information from the first or second synchronization message (SYN1, SYN2), wherein in the master node (MA) a new average transmission time is determined for the next cycle on the basis of the error.

5. Method according to Claim 4, wherein the control to the average transmission time (LD) reads as follows:

$$LD(k+1) = LD(k) + k_i \cdot e(k)$$

wherein LD(k) is the average transmission time for the current cycle;
wherein LD(k+1) is the new average transmission time for the next cycle;
wherein e(k) is the error between the actual accumulated transmission time and the accumulated transmission time corresponding to the synchronization information;
wherein $k_i$ is a control parameter.

6. Method according to any of the preceding claims, wherein the predetermined transmission time (LD) is communicated in a field of the first and second synchronization messages (SYN1, SYN2).

7. Method according to any of the preceding claims, wherein the synchronization information of the first and second synchronization messages (SYN1, SYN2) comprises the master time at the instant of the emission of the first and respectively second synchronization messages (SYN1, SYN2) at the master (MA) and also at least one correction field, to which a respective slave node (SL1, SL2, ..., SL6), upon forwarding a first and respectively second synchronization message (SYN1, SYN2), adds its internal processing time (BD) and the predetermined transmission time (LD).

8. Method according to Claim 7, wherein the at least one correction field comprises a first field, in which exclusively the internal processing times (BD) are added, and also a second field, in which exclusively the predetermined transmission times (LD) are added.

9. Method according to any of the preceding claims, wherein a respective slave node (SL1, SL2, ..., SL6) determines a slave time by means of an estimated RCF factor corresponding to the ratio of the clock frequency of the master clock to the clock frequency of the internal clock of the respective slave node (SL1, SL2, ..., SL6), wherein the RCF factor is preferably estimated only using the first field.

10. Method according to any of the preceding claims in combination with Claim 2, wherein the synchronization information of the first synchronization message (SYN1, SYN2) comprises no information on transmission times along communication paths (PA1, PA2, ..., PA7), wherein, within a cycle of the communication of a first and second synchronization message (SYN1, SYN2) by the closed topology, a respective slave node (SL1, SL2, ..., SL6), upon forwarding the first synchronization message (SYN1), adds to the synchronization information exclusively its internal processing time (BD) between reception and emission of the first synchronization message (SYN1, SYN2) and the respective slave node (SL1, SL2, ..., SL6), upon forwarding a second synchronization message (SYN2), adds to the synchronization information exclusively its internal processing time (BD) between reception and emission of the second synchronization message (SYN1, SYN2) and furthermore transmits an accumulated transmission time - estimated in the master node (MA) - along all communication paths (PA1, PA2, ..., PA7) of the closed topology as part of the synchronization information of the second synchronization message (SYN2).

11. Method according to Claim 10, wherein a respective slave node (SL1, SL2, ..., SL6) determines a slave time by means of an estimated RCF factor corresponding to the ratio of the clock frequency of the master clock to the clock frequency of the internal clock of the respective slave node (SL1, SL2, ..., SL6), wherein the RCF factor is preferably determined only using the internal processing times (BD) in the first and/or second synchronization messages (SYN1, SY2) without taking account of transmission times along communication paths (PA1, PA2, ..., PA7).

12. Method according to any of the preceding claims in combination with Claim 3, wherein the synchronization information both of the first and of the second synchronization messages (SYN1, SYN2) comprises first and second synchronization information, wherein the first synchronization information comprises no information on transmission times along communication paths (PA1, PA2, ..., PA7), wherein a respective slave node (SL1, SL2, ..., SL6), upon forwarding both a first and a second synchronization message (SYN1, SYN2), adds to the first synchronization information exclusively an internal processing time (BD) between reception and emission of the first and respectively second synchronization messages (SYN1, SYN2) and furthermore communicates as second synchronization information an accumulated transmission time - estimated in the master node (MA) - along all communication paths (PA1, PA2, ..., PA7) of the closed topology, wherein the first time (t1) is determined on the basis of the first synchronization information of the first synchronization message (SYN1) received in the respective slave node (SL1, SL2, ..., SL6), and the second time (t2) is determined on the basis of the first and second synchronization information of the second synchronization message (SYN2) received in the respective slave node (SL1, SL2, ..., SL6).

13. Method according to Claim 12, wherein a respective slave node (SL1, SL2, ..., SL6) determines a slave time by means of an estimated RCF factor corresponding to the ratio of the clock frequency of the master clock to the clock frequency of the internal clock of the respective slave node, wherein the RCF factor is preferably determined only using the first synchronization information without taking account of the second synchronization information.

14. Method according to any of the preceding claims, wherein the time synchronization is based on the IEEE 1588 or IEC 61588 or IEEE 802.1AS standard.

15. Method according to any of the preceding claims, wherein the network nodes (MA, SL1, SL2, ..., SL6) communicate with one another on the basis of the PROFINET standard.

16. Method according to any of the preceding claims, wherein the method is used in an industrial automation system.

17. Communication network comprising a multiplicity of network nodes (MA, SL1, SL2, ...,SL6) with one master node (MA) and a plurality of slave nodes (SL1, SL2, ..., SL6), wherein the master node (MA) can detect a master time with a first clock and each slave node (SL1, SL2, ..., SL6) can detect a slave time with an internal clock, wherein synchronization messages (SYN1, SYN2) can be transmitted in the communication network, wherein the synchronization message (SYN1, SYN2) received in a slave node (SL1, SL2, ..., SL6) contains synchronization information which is used for synchronizing the slave time of the slave node (SL1, SL2, ..., SLN) with the master time, wherein the communication network is configured in such a way that a method can be carried out in the communication network, wherein:

   - a closed topology comprising communication paths (PA1, PA2, ..., PA7) between neighboring network nodes (MA, SL1, SL2, ...,SL6) is predefined, wherein the closed topology defines a first transmission direction and an opposite second transmission direction between neighboring network nodes (MA, SL1, SL2, ..., SL6) ;
   - proceeding from the master node (MA), the synchronization messages (SYN1, SYN2) are forwarded in the closed topology in such a way that at least one portion of the slave nodes (SL1, SL2, ..., SL6) in each case receives a first synchronization message (SYN1) from the first transmission direction and a second synchronization message (SYN2) from the second transmission direction;
   - a respective slave node (SL1, SL2, ..., SL6) of the at least one portion of the slave nodes (SL1, SL2, ..., SL6) determines a first time (t1), which is synchronized on the basis of the synchronization information of the first synchronization message (SYN1), and a second time (t2), which is synchronized on the basis of the synchronization information of the second synchronization message (SYN2);
   - an averaged time (ta) is determined by the arithmetic averaging of the first and second times (t1, t2), wherein the items of synchronization information of the first and second synchronization messages (SYN1, SYN2) are configured in such a way that the averaged time (ta) corresponds to the master time,
- **characterized in that** within a cycle of the communication of a first and second synchronization message (SYN1, SYN2) by the closed topology, a respective slave node (SL1, SL2, ..., SL6), upon forwarding the first and second synchronization messages (SYN1, SYN2), adds to the synchronization information an internal processing time (BD) between reception and emission of the first and respectively second synchronization messages (SYN1, SYN2) and also a predetermined transmission time (LD) which is fixed within the cycle, wherein the predetermined transmission time (LD) is set or controlled in the master node (MA) to the average transmission time of the first and respectively second synchronization messages along a communication path (PA1, PA2, ..., PA7) .

**18.** Communication network according to Claim 17, which is configured for carrying out a method according to any of Claims 2 to 16.

**Revendications**

**1.** Procédé destiné à la synchronisation temporelle dans un réseau de communication, qui comprend une pluralité de noeuds de réseau (MA, SL1, SL2, ..., SL6) avec un noeud maître (MA) et plusieurs noeuds esclaves (SL1, SL2, ..., SL6), dans lequel le noeud maître (MA) prend en compte un temps maître avec une horloge maître et chaque noeud esclave (SL1, SL2, ..., SL6) prend en compte un temps esclave avec une horloge interne, dans lequel des messages de synchronisation (SYN1, SYN2) sont transmis dans le réseau de communication et le message de synchronisation (SYN1, SYN2) reçu dans un noeud esclave (SL1, SL2, ..., SL6) contient une information de synchronisation, laquelle est utilisée en vue de la synchronisation du temps esclave du noeud esclave (SL1, SL2, ..., SLN) sur le temps maître, dans lequel :

- une topologie fermée de chemins de communication (PA1, PA2, ..., PA7) entre des noeuds de réseau adjacents (MA, SL1, SL2, ..., SL6) est prédéfinie, dans lequel la topologie fermée établit une première direction de transmission et une deuxième direction de transmission contraire entre des noeuds de réseau adjacents (MA, SL1, SL2, ..., SL6) ;
- à partir du noeud maître (MA) les messages de synchronisation (SYN1, SYN2) sont transférés dans la topologie fermée de telle sorte qu'au moins une partie des noeuds esclaves (SL1, SL2, ..., SL6) reçoit respectivement un premier message de synchronisation (SYN1) en provenance de la première direction de transmission et un deuxième message de synchronisation (SYN2) en provenance de la deuxième direction de transmission ;
- un noeud esclave (SL1, SL2, ..., SL6) respectif de l'au moins une partie des noeuds esclaves (SL1, SL2, ..., SL6) détermine un premier temps (t1), qui est synchronisé en se basant sur l'information de synchronisation du premier message de synchronisation (SYN1), ainsi qu'un deuxième temps (t2), qui est synchronisé en se basant sur l'information de synchronisation du deuxième message de synchronisation (SYN2) ;
- un temps moyen (ta) est déterminé par le biais de l'établissement d'une moyenne arithmétique du premier et du deuxième temps (t1, t2), dans lequel les informations de synchronisation du premier et du deuxième message de synchronisation (SYN1, SYN2) sont configurées de telle sorte que le temps moyen (ta) correspond au temps maître,

**caractérisé en ce que**

- au sein d'un cycle de la transmission d'un premier et d'un deuxième message de synchronisation (SYN1, SYN2) par le biais de la topologie fermée un noeud esclave (SL1, SL2, ..., SL6) respectif lors du transfert du premier et du deuxième message de synchronisation (SYN1, SYN2) à l'information de synchronisation ajoute un temps de traitement interne (BD) entre la réception et l'émission du premier resp. du deuxième message de synchronisation (SYN1, SYN2) ainsi qu'un temps de transmission (LD) prédéterminé et fixe au sein du cycle, dans lequel le temps de transmission (LD) prédéterminé est ajusté ou réglé dans le noeud maître (MA) sur le temps de transmission moyen du premier resp. du deuxième message de synchronisation le long d'un chemin de communication (PA1, PA2, ..., PA7) .

**2.** Procédé selon la revendication 1, dans lequel la topologie fermée est une topologie en anneau, dans lequel le noeud maître (MA) envoie le premier message de synchronisation (SYN1) dans la première direction de transmission de la topologie en anneau et le deuxième message de synchronisation (SYN2) dans la deuxième direction de transmission de la topologie en anneau.

**3.** Procédé selon la revendication 1 ou 2, dans lequel la topologie fermée est une topologie linéaire, laquelle conduit du noeud maître (MA) dans la première direction de transmission à un noeud esclave réfléchissant (SL4) et de là revient au noeud maître (MA), dans lequel le noeud maître (MA) envoie le premier message de synchronisation (SYN1) dans la première direction de transmission, dans lequel le premier message de synchronisation (SYN1) lors du transfert par le biais du noeud esclave réfléchissant (SL4) devient le deuxième message de synchronisation (SYN2).

**4.** Procédé selon l'une des revendications précédentes, dans lequel le réglage sur le temps de transmission moyen (LD) est effectué de telle sorte que le noeud maître (MA) détermine à partir du premier ou du deuxième message de synchronisation (SYN1, SYN2) reçu dans un cycle une erreur entre le temps de transmission effectivement accumulé le long de tous les chemins de communication (PA1, PA2, ..., PA7) de la topologie fermée et le temps de transmission accumulé correspondant à l'information de synchronisation en provenance du premier ou du deuxième message de synchronisation (SYN1, SYN2), dans lequel dans le noeud maître (MA) un nouveau temps de transmission moyen est calculé pour le cycle suivant en se basant sur l'erreur.

**5.** Procédé selon la revendication 4, dans lequel le réglage sur le temps de transmission moyen (LD) est le suivant :

$$LD(k + 1) = LD(k) + k_i \cdot e(k)$$

dans lequel LD(k) est le temps de transmission moyen pour le cycle actuel ;
dans lequel LD(k + 1) est le nouveau temps de transmission moyen pour le cycle suivant ;
dans lequel e(k) est l'erreur entre le temps de transmission accumulé effectif et le temps de transmission accumulé correspondant à l'information de synchronisation ;
dans lequel $k_i$ est un paramètre de réglage.

**6.** Procédé selon l'une des revendications précédentes, dans lequel le temps de transmission (LD) prédéterminé est transmis dans un champ du premier et du deuxième message de synchronisation (SYN1, SYN2).

**7.** Procédé selon l'une des revendications précédentes, dans lequel l'information de synchronisation du premier et du deuxième message de synchronisation (SYN1, SYN2) comprend le temps maître au moment de l'envoi du premier resp. du deuxième message de synchronisation (SYN1, SYN2) chez le maître (MA) ainsi qu'au moins un champ de correction, auquel un noeud esclave (SL1, SL2, ..., SL6) respectif lors du transfert d'un premier resp. d'un deuxième message de synchronisation (SYN1, SYN2) ajoute son temps de traitement interne (BD) et le temps de transmission (LD) prédéterminé.

**8.** Procédé selon la revendication 7, dans lequel l'au moins un champ de correction comprend un premier champ dans lequel seuls les temps de traitement interne (BD) sont ajoutés, ainsi qu'un deuxième champ dans lequel seuls les temps de transmission (LD) prédéterminés sont ajoutés.

**9.** Procédé selon l'une des revendications précédentes, dans lequel un noeud esclave (SL1, SL2, ..., SL6) respectif calcule un temps esclave au moyen d'un facteur RCF estimé qui correspond au rapport entre la cadence d'horloge de l'horloge maître et la cadence d'horloge de l'horloge interne du noeud esclave (SL1, SL2, ..., SL6) respectif, dans lequel le facteur RCF est par exemple estimé uniquement en utilisant le premier champ.

**10.** Procédé selon l'une des revendications précédentes en combinaison avec la revendication 2, dans lequel l'information de synchronisation du premier message de synchronisation (SYN1, SYN2) ne comprend aucune information sur les temps de transmission le long de chemins de communication (PA1, PA2, ..., PA7), dans lequel au sein d'un cycle de la transmission d'un premier et d'un deuxième message de synchronisation (SYN1, SYN2) par le biais de la topologie fermée un noeud esclave (SL1, SL2, ..., SL6) respectif lors du transfert du premier message de synchronisation (SYN1) à l'information de synchronisation ajoute uniquement son temps de traitement interne (BD) entre la réception et l'envoi du premier message de synchronisation (SYN1, SYN2) et le noeud esclave (SL1, SL2, ..., SL6) respectif lors du transfert d'un deuxième message de synchronisation (SYN2) à l'information de synchronisation ajoute uniquement son temps de traitement interne (BD) entre la réception et l'envoi du deuxième message de synchronisation (SYN1, SYN2) et transmet en outre un temps de transmission accumulé estimé dans le noeud maître (MA) le long de tous les chemins de communication (PA1, PA2, ..., PA7) de la topologie fermée en tant que partie de l'information de synchronisation du deuxième message de synchronisation (SYN2).

11. Procédé selon la revendication 10, dans lequel un noeud esclave (SL1, SL2, ..., SL6) respectif calcule un temps esclave au moyen d'un facteur RCF estimé qui correspond au rapport entre la cadence d'horloge de l'horloge maître et la cadence d'horloge de l'horloge interne du noeud esclave (SL1, SL2, ..., SL6) respectif, dans lequel le facteur RCF est de préférence calculé uniquement en utilisant les temps de traitement interne (BD) dans les premier et/ou deuxième messages de synchronisation (SYN1, SYN2) sans tenir compte des temps de transmission le long de chemins de communication (PA1, PA2, ..., PA7).

12. Procédé selon l'une des revendications précédentes en combinaison avec la revendication 3, dans lequel l'information de synchronisation aussi bien du premier que du deuxième message de synchronisation (SYN1, SYN2) comprend une première et une deuxième information de synchronisation, dans lequel la première information de synchronisation ne comprend aucune information sur les temps de transmission le long de chemins de communication (PA1, PA2, ..., PA7), dans lequel un noeud esclave (SL1, SL2, ..., SL6) respectif lors du transfert aussi bien d'un premier que d'un deuxième message de synchronisation (SYN1, SYN2) à la première information de synchronisation ajoute uniquement un temps de traitement interne (BD) entre la réception et l'envoi du premier resp. du deuxième message de synchronisation (SYN1, SYN2) et transmet en outre en tant que deuxième information de synchronisation un temps de transmission accumulé estimé dans le noeud maître (MA) le long de tous les chemins de communication (PA1, PA2, ..., PA7) de la topologie fermée, dans lequel le premier temps (t1) est calculé en se basant sur la première information de synchronisation du premier message de synchronisation (SYN1) reçu dans le noeud esclave (SL1, SL2, ..., SL6) respectif et le deuxième temps (t2) est calculé en se basant sur la première et la deuxième information de synchronisation du deuxième message de synchronisation (SYN2) reçu dans le noeud esclave (SL1, SL2, ..., SL6) respectif.

13. Procédé selon la revendication 12, dans lequel un noeud esclave (SL1, SL2, ..., SL6) respectif calcule un temps esclave au moyen d'un facteur RCF estimé qui correspond au rapport entre la cadence d'horloge de l'horloge maître et la cadence d'horloge de l'horloge interne du noeud esclave respectif, dans lequel le facteur RCF est calculé en utilisant uniquement la première information de synchronisation sans tenir compte de la deuxième information de synchronisation.

14. Procédé selon l'une des revendications précédentes, dans lequel la synchronisation temporelle se base sur la norme IEEE 1588 ou IEC 61588 ou IEEE 802.1AS.

15. Procédé selon l'une des revendications précédentes, dans lequel les noeuds de réseau (MA, SL1, SL2, ..., SL6) communiquent entre eux en se basant sur la norme PROFINET.

16. Procédé selon l'une des revendications précédentes, dans lequel le procédé est mis en oeuvre dans un système d'automatisation industrielle.

17. Réseau de communication qui comprend une pluralité de noeuds de réseau (MA, SL1, SL2, ..., SL6) avec un noeud maître (MA) et plusieurs noeuds esclaves (SL1, SL2, ..., SL6), dans lequel le noeud maître (MA) peut prendre en compte un temps maître avec une première heure et chaque noeud esclave (SL1, SL2, ..., SL6) peut prendre en compte un temps esclave avec une heure interne, dans lequel des messages de synchronisation (SYN1, SYN2) peuvent être transmis dans le réseau de communication, dans lequel le message de synchronisation (SYN1, SYN2) reçu dans un noeud esclave (SL1, SL2, ..., SL6) contient une information de synchronisation qui est utilisée en vue de la synchronisation du temps esclave du noeud esclave (SL1, SL2, ..., SLN) sur le temps maître, dans lequel le réseau de communication est configuré de telle sorte qu'un procédé est exécutable dans le réseau de communication, dans lequel :

    - une topologie fermée de chemins de communication (PA1, PA2, ..., PA7) entre des noeuds de réseau adjacents (MA, SL1, SL2, ..., SL6) est prédéfinie, dans lequel la topologie fermée établit un premier message de transmission et un deuxième message de transmission contraire entre des noeuds de réseau adjacents (MA, SL1, SL2, ..., SL6) ;
    - à partir du noeud maître (MA) les messages de synchronisation (SYN1, SYN2) sont transférés dans la topologie fermée de telle sorte qu'au moins une partie des noeuds esclaves (SL1, SL2, ..., SL6) reçoit respectivement un premier message de synchronisation (SYN1) en provenance de la première direction de transmission et un deuxième message de synchronisation (SYN2) en provenance de la deuxième direction de transmission ;
    - un noeud esclave (SL1, SL2, ..., SL6) respectif de l'au moins une partie des noeuds esclaves (SL1, SL2, ..., SL6) détermine un premier temps (t1), qui est synchronisé en se basant sur l'information de synchronisation du premier message de synchronisation (SYN1), ainsi qu'un deuxième temps (t2), qui est synchronisé en se basant sur l'information de synchronisation du deuxième message de synchronisation (SYN2) ;
- un temps moyen (ta) est déterminé par le biais de l'établissement d'une moyenne arithmétique du premier et du deuxième temps (t1, t2), dans lequel les informations de synchronisation du premier et du deuxième message de synchronisation (SYN1, SYN2) sont configurées de telle sorte que le temps moyen (ta) correspond au temps maître,

**caractérisé en ce que**

- au sein d'un cycle de la transmission d'un premier et d'un deuxième message de synchronisation (SYN1, SYN2) par le biais de la topologie fermée un noeud esclave (SL1, SL2, ..., SL6) respectif lors du transfert du premier et du deuxième message de synchronisation (SYN1, SYN2) à l'information de synchronisation ajoute un temps de traitement interne (BD) entre la réception et l'envoi du premier resp. du deuxième message de synchronisation (SYN1, SYN2) ainsi qu'un temps de transmission (LD) prédéterminé et fixe au sein du cycle, dans lequel le temps de transmission (LD) prédéterminé est ajusté ou réglé dans le noeud maître (MA) sur le temps de transmission moyen du premier resp. du deuxième message de synchronisation le long d'un chemin de communication (PA1, PA2, ..., PA7) .

18. Réseau de communication selon la revendication 17, lequel est configuré en vue de l'exécution d'un procédé selon l'une des revendications 2 à 16.

FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7280550 B